# EUROPEAN PATENT APPLICATION

(11) **EP 2 202 891 A1**
(43) Date of publication of application: **30.06.2010**
(21) Application number: 08839404.4
(22) Date of filing: 19.09.2008
(51) Int. Cl.: H04B 1/59, G06K 17/00, G06K 19/07, H04B 5/02

(54) **RADIO FREQUENCY IDENTIFICATION TAG COMMUNICATION DEVICE**

(30) Priority: 17.10.2007 JP 2007270094
(71) Applicant: Brother Kogyo Kabushiki Kaisha, Nagoya-shi, Aichi 467-8561 (JP)
(72) Inventor: ISOMURA, Tsuyoshi, Nagoya-shi Aichi 467-8561 (JP)
(74) Representative: Jackson, Martin Peter
(86) International application number: PCT/JP2008/066984
(87) International publication number: WO 2009/050980

(57) **Abstract**

[Object] Detection time of an RFID tag is reduced, and search efficiency is improved.

[Solving Means] There are provided a reader antenna unit 3 configured to conduct radio communication with at least one RFID tag T provided with a session flag S0 capable of reversing and changing contents at response and a switch portion 341 capable of sequentially switching a polarization direction at the reader antenna unit 3 in a plurality of directions. A "Select" command for unifying the contents of the session flag S0 of the RFID tag T present in a communication area 20 to a state before reverse is transmitted to the RFID tag T corresponding to each of the polarization directions sequentially switched and then, the "Select" command is transmitted to the RFID tag T corresponding to each polarization direction and moreover, a "Query" command for obtaining tag information stored in the RFID tag T is transmitted.

## Description

### TECHNICAL FIELD

The present invention relates to an apparatus for communicating with an RFID tag capable of information transmission and reception with an RFID tag.

### BACKGROUND ART

An RFID (Radio Frequency Identification) system configured to read and write information of an RFID tag in a non-contact manner by transmitting an inquiry and receiving a reply by an apparatus (reader/writer) for communicating with an RFID tag with respect to a small-sized RFID tag is known.

An RFID tag circuit element disposed on a label-shaped RFID tag, for example, is provided with an IC circuit part storing desired RFID tag information and an antenna connected to the IC circuit part and performing transmission and reception of the information. The IC circuit part demodulates and interprets a signal received by the antenna, generates a reply signal on the basis of an information signal stored in a memory and transmits it to the apparatus for communicating with an RFID tag through the antenna.

Here, there can be a wide variety of applications for the RFID system, and the system has been already put into practice. But in order to cover and detect the RFID tags present in a relatively large desired space such as an office floor, a library, a warehouse, for example, without missing, a plurality of interrogators need to be installed so that their communicable ranges are overlapped with each other to some degree. As an example of the apparatus for communicating with an RFID tag which can handle this, an apparatus described in Patent Document 1, for example, is known.

In this prior art reference, in order to obtain response signals without missing, a plurality of apparatuses for communicating with an RFID tag (interrogators) are installed so that their communicable ranges are overlapped with each other. Then, by synchronizing transmission and reception of each apparatus for communicating with an RFID tag, interference between the apparatuses for communicating with an RFID tag can be prevented.

[Patent Document 1] JP, A, 2003-283367

### DISCLOSURE OF THE INVENTION

### Problem to be solved by the Invention

In the above prior art reference, it is configured such that smooth response communication from the RFID tag can be realized by preventing interference between the apparatuses for communicating with an RFID tag. However, radio waves from the plurality of apparatuses for communicating with an RFID tag reach the RFID tag located within overlapped communicable ranges, respectively. That is, even though such an RFID tag has already responded to an apparatus for communicating with an RFID tag and has been detected, it responds to another apparatus for communicating with an RFID tag and is detected again after that (responds plural times). As a result, wasteful communication time is needed, and detection time is prolonged. Also, since the detection results are duplicated by the responses plural times, deletion processing of the detection results is required, by which the detection time is further prolonged. Because of the prolonged detection time as above, improvement of search efficiency is difficult.

The present invention has an object to provide an apparatus for communicating with an RFID tag that can reduce the detection time of the RFID tag and improve the search efficiency.

### Means for Solving the Problem

In order to achieve the above-described object, according to the first invention, there is provided an apparatus for communicating with an RFID tag comprising: antenna means configured to conduct radio communication with at least one RFID tag having a reversible identifier capable of being reversed at response; communication area switching means capable of sequentially switching and generating a plurality of modes of communication areas from the antenna means; identifier unification command transmitting means configured to transmit an identifier unification command for unifying the reversible identifier of the RFID tag present within the communication area to a state before reverse to the RFID tag present in each mode of the communication area sequentially generated by the communication area switching means through the antenna means; and reading command transmitting means configured to transmit a reading command for obtaining information stored in the RFID tag to the RFID tag through the antenna means after the identifier unification command is transmitted to the RFID tag in the plurality of modes of communication area generated by the communication area switching means.

In a first invention of the present application, an RFID tag is provided with a reversible identifier which can be reversed in response. At this time, a communication area formed by antenna means is overlapped with each other at least partially and can be sequentially switched to a plurality of modes by communication area switching means. Then, an identifier unification command is transmitted from identifier unification command transmitting means to the RFID tag in the communication area in each mode. As a result, all the reversible identifiers of the RFID tags present in each communication area are unified to a state before reverse. After that, while the mode of the communication area is switched by the communication area switching means, a reading command is transmitted from reading command transmitting means to the RFID tag present in each communication area, and information stored in the RFID tag is obtained.

At this time, the RFID tag having responded to the reading command has the reversible identifier changed from the state before reverse to a state after reverse. Therefore, since the RFID tag having responded once in the communication area in a mode has the reversible identifier in the state after reverse even if it is present in duplicate in the communication area in the mode switched after that, the RFID tag can be distinguished from an RFID tag not having responded yet (the reversible identifier is in the state before reverse). That is, in the communication area in the switched mode, by transmitting the reading command by specifying only the RFID tag whose reversible identifier is in the state before reverse, the RFID tags present in duplicate can be prevented from responding again.

As described above, in communication by switching the mode of the communicable area, even if there are RFID tags present in duplicate in the communication areas in the plural modes, response can be reliably prevented after a single response is made to the apparatus side. As a result, the detection time of the RFID tag can be reduced, and search efficiency can be improved as compared with a situation in which the deletion processing of the detection result should be performed by the apparatus side after the RFID tags are detected in duplicate several times.

According to the second invention, in the apparatus according to the first invention, the reading command transmitting means transmits the reading command to the RFID tag present in each mode of the communication area according to sequential switching of the mode of the communication area by the communication area switching means after the identifier unification command is transmitted to the RFID tag of the plurality of modes of communication area.

After all the reversible identifiers of the RFID tags present in each communication area are unified to the state before reverse, while the mode of the communication area is switched by the communication area switching means, a reading command is transmitted to the RFID tag present in the communication area in each mode and information is obtained from the RFID tag for each communication area. At this time, using the fact that the RFID tag having responded has the reversible identifier changed to the state after reverse, the reading command is transmitted by specifying only the RFID tag with the reversible identifier in the state before reverse in the communication area after the switching so that the RFID tag having responded once can be prevented from responding again.

According to the third invention, in the apparatus according to the second invention, the reading command transmitting means generates the reading command for obtaining the information with specifying the RFID tag whose the reversible identifier is in the state before reverse and transmits the command to the RFID tag through the antenna means, and the apparatus further comprises: slot receiving means capable of receiving response signals transmitted from the RFID tags according to the reading command by dividing the receiving response signals into a plurality of identification slots; and slot control means that decreases the number of the identification slot of the slot receiving means according to sequential switching of the mode of the communication area by the communication area switching means after the identifier unification command is transmitted to the RFID tag present in the plurality of modes of communication area.

In a communication area in a certain mode, the RFID tag having responded to a reading command once has its reversible identifier changed to the state after reverse. Therefore, when the reading command transmitting means specifies only the RFID tag having the reversible identifier in the state before reverse in the communication area switched to another mode after that and transmits the reading command, the RFID tag having responded stops responding. As a result, the RFID tags present in the communication area in duplicate in a plurality of modes are reliably prevented from responding plural times.

Also, slot receiving means receives and obtains the response signal from the RFID tag having responded to the reading command while selecting it using an identification slot. At this time, in response to the fact that the RFID tag having responded once does not respond again, slot control means decreases the number of identification slots each time the mode of the communication area is switched. As a result, unnecessary increase of the number of slots is prevented and the number of slots is minimized, and communication time can be reduced.

According to the forth invention, in the apparatus according to the third invention, the antenna means includes a plurality of antennas with modes of communication area different from each other; and the communication area switching means includes antenna switching means that switches the antennas that conduct information transmission and reception with the RFID tag.

By switching the antenna used for the communication by antenna switching means, several modes of such as a position of the communication area, a size of the communication area can be switched.

According to the fifth invention, in the apparatus according to the third invention, the communication area switching means includes directivity control means that controls a directivity by the antenna means and generates a plurality of the communication areas with main lobe direction different from each other.

By switching a main lobe direction by directivity control means, a plurality of communication areas with different directivities can be sequentially generated.

According to the sixth invention, in the apparatus according to the third invention, the communication area switching means includes polarization phase control means that controls a polarization phase of a communication wave from the antenna means and generates a plurality of the communication areas with polarization directions different from each other.

By switching a polarization phase by polarization phase control means, a plurality of communication areas with different polarization directions can be sequentially generated.

According to the seventh invention, in the apparatus according to the third invention, the communication area switching means includes frequency control means that controls a communication frequency from the antenna means and generates a plurality of the communication areas with communication frequency different from each other.

By switching a communication frequency by frequency control means, a plurality of communication areas with different frequencies can be sequentially generated.

According to the eighth invention, in the apparatus according to the third invention, the antenna means includes a single antenna constituted movably; and the communication area switching means includes antenna moving means that moves the antenna to a plurality of locations and has the antenna conduct communication at each location.

By moving the antenna by antenna driving means, a position of the communication area can be switched to plural spots.

### Advantages of the Invention

According to the present invention, detection time of the RFID tag can be reduced, and search efficiency can be improved.

### BRIEF DESCRIPTION OF THE DRAWING

Fig. 1 is a diagram illustrating an example of a case in which a reader of an embodiment of the present invention is applied to management of a large number of articles to which RFID tags are attached.
Fig. 2 is a system configuration diagram illustrating an outline of the reader.
Fig. 3 is a functional block diagram illustrating a detailed configuration of a CPU, an RF communication control part, and a reader antenna in the reader.
Fig. 4 is a block diagram illustrating an example of a functional configuration of an RFID tag circuit element disposed in the RFID tag.
Fig. 5 is a diagram illustrating an example of a time chart of a signal transmitted and received between the reader and the single RFID tag.
Fig. 6 is a flowchart illustrating a control procedure executed by the CPU of the reader.
Fig. 7 is a flowchart illustrating a detailed procedure of tag information detection processing executed at Step S100A and Step S100B in Fig. 6.
Fig. 8 is a flowchart illustrating a control procedure executed by a control part of an RFID tag circuit element.
Fig. 9 is a diagram illustrating an example of a sequence of a signal transmitted and received between the reader executing the control procedure in Figs. 6 and 7 and a plurality of RFID tags executing the control procedure in Fig. 8.
Fig. 10A-10D are diagrams illustrating an example of an arrangement relationship when a directivity of a single antenna element is changed and switched so that a plurality of communication areas are partially overlapped.
Fig. 11 is a diagram illustrating an example of an arrangement relationship when connection of a plurality of antenna elements is switched so that a plurality of communication areas are partially overlapped.
Fig. 12 is a diagram illustrating an example of an arrangement relationship when a position of a single antenna element is changed so that a plurality of communication areas are partially overlapped.

### Best Mode for Carrying Out the Invention

An embodiment of the present invention will be described referring to the attached drawings. This embodiment is an example in which an apparatus for communicating with an RFID tag of the present invention is applied to management of a large quantity of articles to which an RFID tag is attached, respectively, for example.

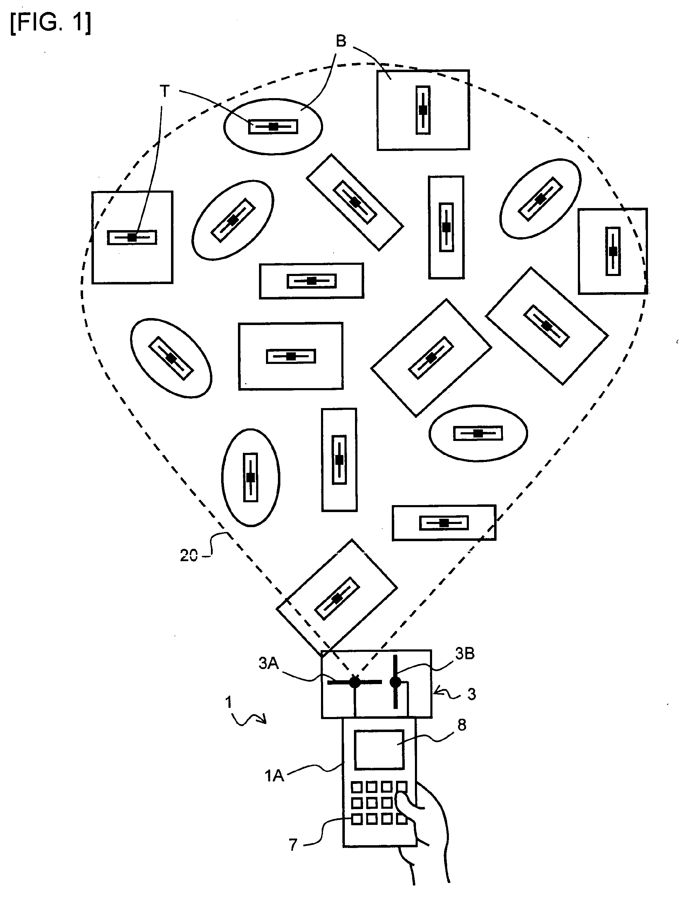

In Fig. 1, an RFID tag T is attached to each of the large quantity of articles B. Each of the RFID tags T has a so-called dipole tag antenna 151 in this example. By being attached to each article B, the longitudinal directions of the tag antennas 151 are directed to random directions (any of vertical, horizontal and diagonal directions in the illustrated example). The longitudinal direction of the tag antenna 151 is a direction where a potential of a radio wave is changed and a so-called polarization direction of a communication wave.

A reader 1, which is the apparatus for communicating with an RFID tag of this embodiment, is a handheld type and has a substantially rectangular solid housing 1A. In the housing 1A, a reader antenna unit (antenna means) 3 is disposed at one of end portions in the longitudinal direction, and an operation part 7 and a display part 8 are disposed on one of flat plane portions.

The antenna unit 3 is provided with a lateral antenna element 3A and a vertical antenna element 3B so as to switch the polarization phase to the lateral direction and the vertical direction, respectively (the details will be described later). The lateral antenna element 3A is disposed in arrangement with its longitudinal direction parallel with the width direction of the housing 1A of the reader 1, while the other vertical antenna element 3B is disposed in arrangement with its longitudinal direction parallel with the thickness direction of the housing of the reader 1. These antenna elements 3A and 3B are constituted by so-called dipole antennas having a substantially straight shape in general in this example. In each of the antenna elements 3A and 3B, the longitudinal direction is a potential surface of the radio wave, that is, the direction forming the polarization phase (reader-side polarization direction, which will be described later).

In this example, a user (administrator of the article B; operator) manages a storage state of each article B by reading information relating to the corresponding article B from the RFID tag T attached to each article B via radio communication using the reader 1. Here, a communication area 20 (range shown by a broken line in the figure) of the reader 1 is an area spread from the reader antenna unit 3 as an origin and its range is limited according to its directivity and output power (so-called aerial power).

In the RFID tags T present in the communication area 20, only the RFID tag T arranged in an attitude with the polarization direction of the tag antenna 151 (hereinafter referred to as a tag-side polarization direction) to be close (direction with less angular deviation) to the polarization direction of the reader antenna unit 3 (hereinafter referred to as a reader-side polarization direction) at that time can conduct favorable radio communication with the reader 1.

Usually, if the angular deviation is approximately 90°, that is, the polarization directions are in an arrangement relationship substantially crossing each other at a right angle, radio communication is not possible in general. On the other hand, if the angular deviation between the tag-side polarization direction and the reader-side polarization direction is approximately 45°, for example, substantially normal radio communication can be conducted in some cases. Therefore, as in the example shown in Fig. 1, if the tag-side polarization directions of the large number of RFID tags T are not uniform but random, by switching the lateral antenna element 3A and the longitudinal antenna element 3B for use, the reader-side polarization phase of the reader antenna unit 3 is switched among the lateral direction or two directions orthogonal to the lateral direction, and information is read by each via radio communication. With this arrangement, the RFID tag T with the tag-side polarization direction substantially matching or close to one (lateral direction) of the two orthogonal reader-side polarization directions can conduct communication with the reader antenna unit 3 in the lateral reader-side polarization direction through the lateral antenna element 3A. Also, the RFID tag T with the tag-side polarization direction substantially matching or close to the other (vertical direction) in the two orthogonal reader-side polarization directions can conduct communication with the reader antenna unit 3 in the vertical reader-side polarization direction through the vertical antenna element 3B. The RFID tag T with the arrangement in which the tag-side polarization direction is an angular direction substantially in the middle of the vertical direction and the lateral direction (that is, the angular deviation to each is a diagonal direction of approximately 45°) can conduct radio communication with the reader antenna unit 3 in either of the lateral reader-side polarization direction through the lateral antenna element 3A or the vertical reader-side polarization direction through the vertical antenna element 3B. As a result, by conducting communication by switching the reader-side polarization direction between the vertical direction and the lateral direction, information can be read form all the RFID tags T present in the communication area 20.

The reader antenna unit 3 is not limited to the configuration provided with the so-called dipole antenna elements 3A and 3B as above. There may be such configuration that the polarization direction is switched by changing a direction of a current flow by using an antenna in another form such as a microstrip antenna, for example.

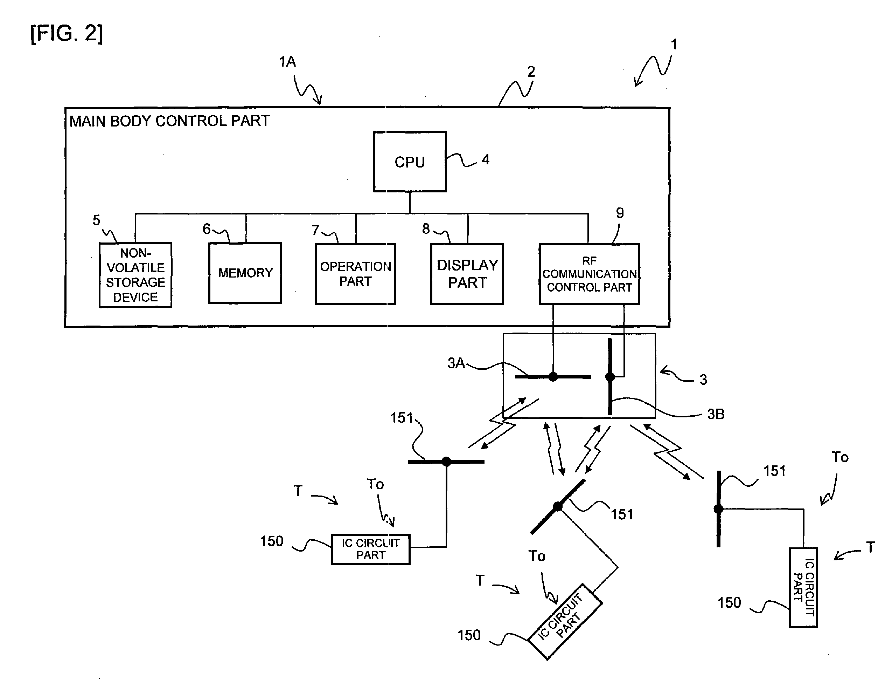

Fig. 2 is a system configuration diagram illustrating an outline of the reader 1 of this embodiment.

In Fig. 2, the reader 1 has a main body control part 2 within the above-described housing 1A. The main body control part 2 includes a CPU 4, a nonvolatile storage device 5 constituted by a hard disk device or a flash memory, for example, and storing various types of communication parameters (details will be described later) relating to the radio communication of the reader 1 and various types of information such as management states of the article B, memory 6 constituted by a RAM and ROM, for example, the operation part 7 to which an instruction from a user and information are inputted, the display part 8 that displays various types of information and messages, and an RF communication control part 9 that controls radio communication with the RFID tag T through the reader antenna unit 3.

The CPU 4 performs signal processing according to a program stored in the ROM in advance using a temporary storage function of the RAM and executes various controls of the entire reader 1 by that.

The RFID tag T has an RFID tag circuit element To provided with the tag antenna 151 and the IC circuit part 150 and is made capable of being attached to the article B by disposing the RFID tag circuit element To on a base material, not particularly shown (The RFID tag circuit element To will be described later in detail). The tag antenna 151 is configured by a dipole antenna in a substantially straight shape in general in this example as described above and its longitudinal direction is a direction forming a polarization phase (the tag-side polarization direction).

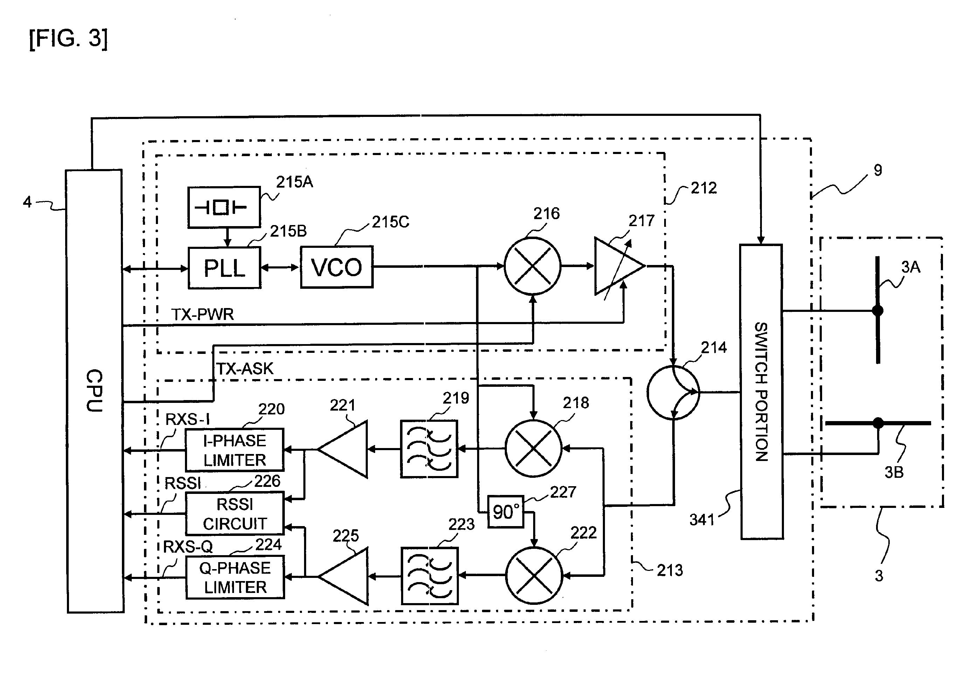

Fig. 3 is a functional block diagram illustrating a detailed configuration of the RF communication control part 9 in the reader 1 together with the CPU.

In Fig. 3, the CPU 4 processes a signal read of the IC circuit part 150 of the RFID tag circuit element To and reads information and creates various commands (details will be described later) to access the IC circuit part 150 of the RFID tag circuit element To.

The RF communication control part 9 makes an access to information (including a tag ID) of the IC circuit part 150 in the RFID tag circuit element To through the reader antenna unit 3. That is, the RF communication control part 9 is configured by a switch portion (communication area switching means) 341 for switching connection of the two antenna elements 3A and 3B by the CPU 4, a transmitting portion 212 that transmits a signal to the RFID tag circuit element To through the reader antenna unit 3, a receiving portion 213 that receives an input of a response wave from the RFID tag circuit element To received by the reader antenna unit 3, and a transmit-receive splitter 214.

The switch portion 341 is a switch circuit using a known radio frequency FET or a diode and selectively connects either of the lateral antenna element 3A or the vertical antenna element 3B by a control signal from the CPU 4 to the transmit-receive splitter 214.

The transmitting portion 212 is a block configured to generate an interrogation wave to access RFID tag information of the IC circuit part 150 of the RFID tag circuit element To (for reading in this example). That is, the transmitting portion 212 includes a crystal oscillator 215A configured to output a reference signal of a frequency, a Phase Locked Loop (hereinafter referred to as a "PLL") 215B configured to generate a carrier wave with a predetermined frequency by dividing and multiplying an output of the crystal oscillator 215A by means of control of the CPU 4, a Voltage Controlled Oscillator (hereinafter referred to as a "VCO") 215C, a transmission multiplying circuit 216 (an amplification rate variable amplifier, for example, may be used in the case of amplitude modulation) configured to modulate the carrier wave generated on the basis of the signal supplied from the CPU 4 (amplitude modulation on the basis of the "TX_ASK" signal from the CPU 4 in this example), and a variable transmission amplifier 217 configured to amplify the modulated wave modulated by the transmission multiplying circuit 216 (amplification with an amplification rate determined by a "TX_PWR" signal from the CPU 4 in this example) and to create a desired interrogation wave. The generated carrier wave uses a frequency of a UHF band, for example. The output of the transmission amplifier 217 is transmitted to either of the antenna elements 3A or 3B of the reader antenna unit 3 through the transmit-receive splitter 214 and the switch portion 341 and is supplied to the IC circuit part 150 of the RFID tag circuit element To. The interrogation wave is not limited to the signal modulated as above (modulated wave), but the wave might be a simple carrier wave.

The receiving portion 213 includes an I-phase receiving signal multiplying circuit 218 configured to multiply and demodulate the response wave from the RFID tag circuit element To received by the reader antenna unit 3 and the carrier wave, an I-phase band-pass filter 219 configured to take out only a signal in a required band from the output of the I-phase receiving signal multiplying circuit 218, an I-phase receiving signal amplifier 221 configured to amplify an output of the I-phase band-pass filter 219, an I-phase limiter 220 configured to further amplify the output of the I-phase receiving signal amplifier 221 and to convert it to a digital signal, a Q-phase receiving signal multiplying circuit 222 configured to multiply the response wave from the RFID tag circuit element To received at the reader antenna unit 3 and a signal of the carrier wave whose phase is delayed by a phase shifter 227 by 90°, a Q-phase band-pass filter 223 configured to take out only a signal in a required band from the output of the Q-phase receiving signal multiplying circuit 222, a Q-phase receiving signal amplifier 225 configured to amplify an output of the Q-phase band-pass filter 223, and a Q-phase limiter 224 configured to further amplify the output of the Q-phase receiving signal amplifier 225 and to convert it to a digital signal. A signal "RXS-I" outputted from the I-phase limiter 220 and a signal "RXS-Q" outputted from the Q-phase limiter 224 are inputted into the CPU 4 and processed.

The outputs from the I-phase receiving signal amplifier 221 and the Q-phase receiving signal amplifier 225 are also inputted into an RSSI (Received Signal Strength Indicator) circuit 226 and a signal "RSSI" indicating the intensity of these signals is inputted into the CPU 4. With the arrangement, the reader 1 demodulates the response wave from the RFID tag circuit element To by I-Q quadrature demodulation.

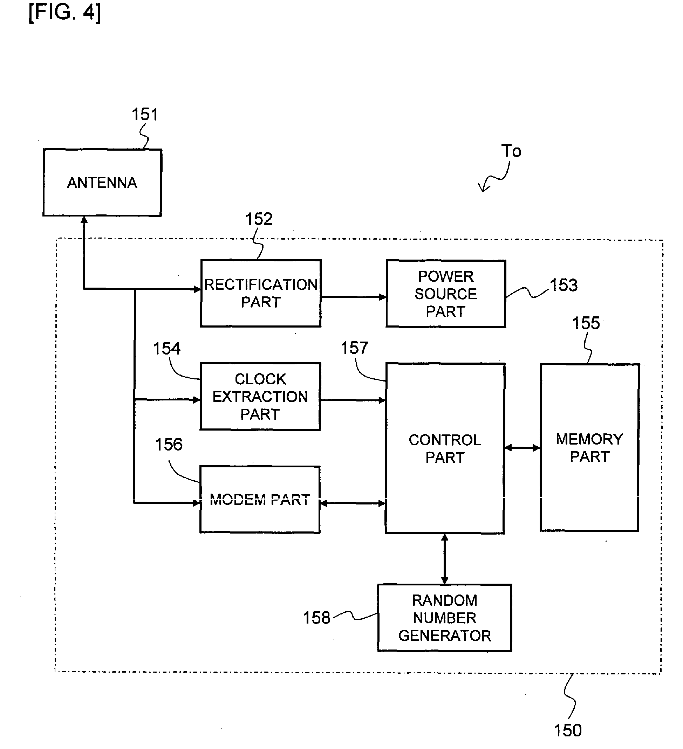

Fig. 4 is a block diagram illustrating an example of a functional configuration of the RFID tag circuit element To disposed in the RFID tag T.

In Fig. 4, the RFID tag circuit element To has the tag antenna 151 configured to transmit and receive a signal in a non-contact manner with the reader antenna unit 3 of the reader 1 as described above and the IC circuit part 150 connected to the tag antenna 151.

The IC circuit part 150 includes a rectification part 152 configured to rectify the interrogation wave (interrogation signal) received by the tag antenna 151, a power source part 153 configured to accumulate energy of the interrogation wave rectified by the rectification part 152 and to use the energy as a driving power source, a clock extraction part 154 configured to extract a clock signal from the interrogation wave received by the tag antenna 151 and to supply the signal to the control part 157, a memory part 155 capable of storing a desired information signal, a modem part 156 connected to the tag antenna 151, a random number generator 158 configured to generate a random number for determining to which identification slot the RFID tag circuit element To outputs the response signal when the interrogation signal from the reader 1 is received (details of the interrogation signal and the identification slot will be described later), and a control part 157 configured to control operations of the RFID tag circuit element To through the memory part 155, the clock extraction part 154, the random number generator 158, and the modem part 156, for example.

The modem part 156 demodulates an interrogation wave from the reader antenna unit 3 of the reader 1, received by the tag antenna 151 and also modulates a reply signal from the control part 157 and transmits it as a response wave (signal including a tag ID) from the tag antenna 151.

The clock extraction part 154 extracts a clock component from the received signal and supplies a clock corresponding to a frequency of the clock component to the control part 157.

The random number generator 158 generates a random number from 0 to 2^{Q}-1 to a slot number specified value Q specified in the interrogation signal from the reader 1 (The details will be described later).

The control part 157 executes basic control such that interpretation of a received signal demodulated by the modem part 156, generation of a reply signal on the basis of the information signal stored in the memory part 155, and replying of the reply signal through the tag antenna 151 by the model part 156 in an identification slot corresponding to the random number generated by the random number generator 158, for example.

In the memory part 155, a session flag S0 (=reversible identifier, which will be described later) for distinguishing a communication session at that time is stored capable of automatic reverse and change of the contents. Instead of the storage of the session flag S0 in the memory part 155 as above, a register in the control part 157 may be used so as to have it perform the substantially equal function.

Here, the reader 1 of this embodiment first transmits a command to unify contents of the session flag S0 via each radio communication by the two reader-side polarization directions to the RFID tag circuit element To (with the specification complying with the EPC global Class-I Generation II standards) as its characteristic. Then, in the respective radio communication by each of the reader-side polarization directions, a command to request tag information only from the RFID tag circuit element To with the unified contents in the session flag S0. The details will be sequentially described below.

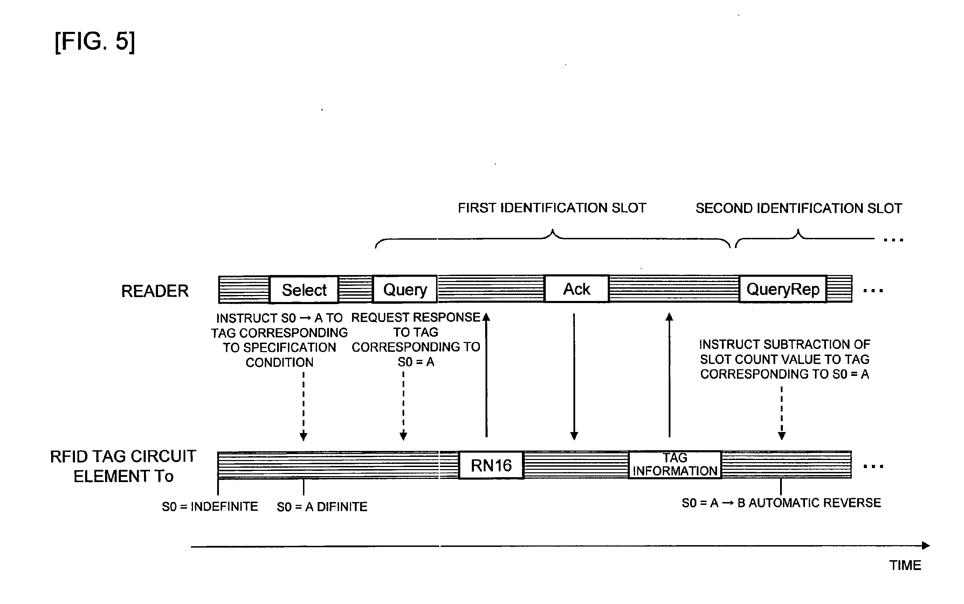

First, a signal transmitted and received between the reader 1 and the RFID tag circuit element To and a method of transmission and reception thereof will be described using the international standard ISO/IEC 18000-6 Type C protocol as an example. Fig. 5 is a diagram illustrating an example of a time chart of a signal transmitted and received between the reader 1 and the RFID tag circuit element To of one of the RFID tags T. The method of transmitting and receiving a signal shown in FIG. 5 is based on the known Slotted Random method, and a change over time is shown from the left side to the right side in the figure. Also, arrows shown between the reader 1 and the RFID tag circuit element To indicate a transmission direction of the signal, in which a broken line indicates a case in which the other party of transmission is unspecified, while a solid line indicates a case in which the other party of transmission is specified.

In Fig. 5, the reader 1 first transmits a "Select" command (identifier unifying command) to the RFID tag circuit elements To of all the RFID tags T present in the communication area 20. This "Select" command is a command to specify a condition of the RFID tag circuit element To with which the reader 1 conducts radio communication after that, and various conditions are specified and the number of RFID tag circuit elements To whose information is to be read is limited so that efficiency of the radio communication can be improved. Only the RFID tag circuit element To satisfying the specified conditions in the RFID tag circuit elements To having received the "Select" command can conduct radio communication after that (In the figure, one of the RFID tag circuit elements T satisfying the specified conditions is shown).

Moreover, with the "Select" command, an instruction can be made to arbitrarily specify and change the contents of the session flag S0 (here, the session flags are represented by S0, but any of S0 to S3 may be used to obtain the same result) stored in the RFID tag circuit element To of the RFID tag T satisfying the specified condition. Here, the contents of the session flag S0 of the RFID tag circuit element To in this example have two types of states, which are "A" and "B", and in which communication state (so-called communication session) the RFID tag circuit element To is can be distinguished from the contents of the session flag. In the illustrated example, the "Select" command instructs that the contents of the session flag S0 should be "A", and the contents of the session flag S0 of the RFID tag circuit element To, which have been indefinite, are determined as "A" upon reception of the "Select" command.

Subsequently, the reader 1 transmits a "Query" command (reading command) requesting the same RFID tag group to transmit and respond the respective tag information (including a tag ID, which is identification information). This "Query" command is a search command for making a search under a condition that the number of RFID tag circuit elements To expected to respond is indefinite. This "Query" command includes a slot number specified value Q specified with a desired number (for example, any of values from 0 to 15 in this example). If the RF communication control part 9 transmits the "Query" command through the reader antenna unit 3, each of the RFID tag circuit elements of the RFID tags T creates random numbers from 0 to 2^{Q}-1 (= Q power of 2 - 1) by the random-number generator 158 and holds it as slot count value SC.

Also, with this "Query" command, the RFID tag circuit element To from which a response is to be requested can be limited by the contents of the session flag S0. That is, the "Query" command also includes the contents of the session flag S0 to be arbitrarily specified together with the slot number specified value Q, and only the one having contents of the stored session flag S0 at that time among the received RFID tag circuit elements To matching the specified contents included in "Query" command (that is, in the same communication session) will transmit a response signal to the reader 1 after that. In the illustrated example, the "Query" command requests a response only from the RFID tag circuit element To with the contents of the session flag S0 as "A", and the RFID tag circuit element To with the contents of the session flag S0 as "A" responds to the reader 1 after that as shown in the figure.

Then, after the reader 1 transmits the "Query" command through the reader antenna unit 3, the reader 1 waits for a response from the RFID tag circuit element To in a predetermined identification slot. This identification slot is a timeframe divided by a predetermined period after the "Query" command (or a "QueryRep" command, which will be described later) is first transmitted. This identification slot is usually repeated continuously for a predetermined number of times (a single session of a first identification slot of the "Query" command and 2^{Q}-1 sessions of a second identification slot and after of the "QueryRep" command, = 2^{Q} times).

Then, as in the illustrated example, the RFID tag circuit element To having created a value 0 as a slot count value SC responds in the first identification slot containing this "Query" command. At this time, the RFID tag circuit element To transmits an "RN16" response using a pseudo random number of 16 bits, for example, in order to obtain permission to transmit the tag information to the reader 1 as a response signal.

Then, the reader 1 having received the "RN16" response transmits an "Ack" command to permit transmission of the tag information with the contents corresponding to the "RN16" response. If the RFID tag circuit element To having received the "Ack" command determines that the "RN16" response transmitted first by the RFID tag circuit element To itself corresponds to the received "Ack" command, the RFID tag circuit element To considers that the transmission of the tag information of the RFID tag circuit element To is permitted and transmits the tag information (including the tag ID). As described above, transmission and reception of a signal in a single identification slot is performed.

After that, further in the second identification slot and after, the reader 1 transmits the "QueryRep" command instead of the "Query" command and waits for a response of another RFID tag circuit element To (not particularly shown) in the identification slot timeframe disposed immediately after that. At this time, in the RFID tag circuit element To of the RFID tag T with the specification complying with the EPC global Class-I Generation II standards, the contents of the session flag S0 are automatically reversed and changed to another contents different from before (A -> B; B -> A) when the "QueryRep" command is received. In the illustrated example, the RFID tag circuit element To having received the "QueryRep" command automatically reverses the contents of the session flag S0, which have been "A" (state before reverse), to the other "B". As a result, even if the "Query" command (or the "QueryRep" command) specifying the contents of the session flag S0 with "A" is received after that, the tag circuit element is in the standby state in which a response operation is not performed.

This "QueryRep" command can also limit the RFID tag circuit element To from which a response is requested with the contents of the session flag S0. The RFID tag circuit element To having received the "QueryRep" command with the matched session flag S0 subtracts the value of its own slot count value SC only by 1 and holds it and transmits and receives a signal including the "RN16" response in the identification slot at the time when the value of the slot count value SC becomes 0 with the reader 1.

If there is no applicable RFID tag circuit element To in each identification slot (with the slot count value SC at 0 in the identification slot), the identification slot is finished in a predetermined timeframe without transmission and reception of the "Query" command or the "QueryRep" command. Also, a time interval between a plurality of commands transmitted and received is adjusted as appropriate so as to have an appropriate interval.

As described above, since each RFID tag circuit element To replies a response signal in different identification slot, the reader 1 can clearly receive and take in the tag information of the RFID tag circuit element To one by one through the reader antenna unit 3 without being subjected to interference. Also, even if the same RFID tag circuit element To receives the "Query" command specifying the contents of the same session flag S0 several times, once it can response to the "Query" command normally, it no longer responds to the "Query" command received subsequently, and wasteful repetition of transmission of the tag information by the RFID tag circuit element To of the same RFID tag T can be prevented.

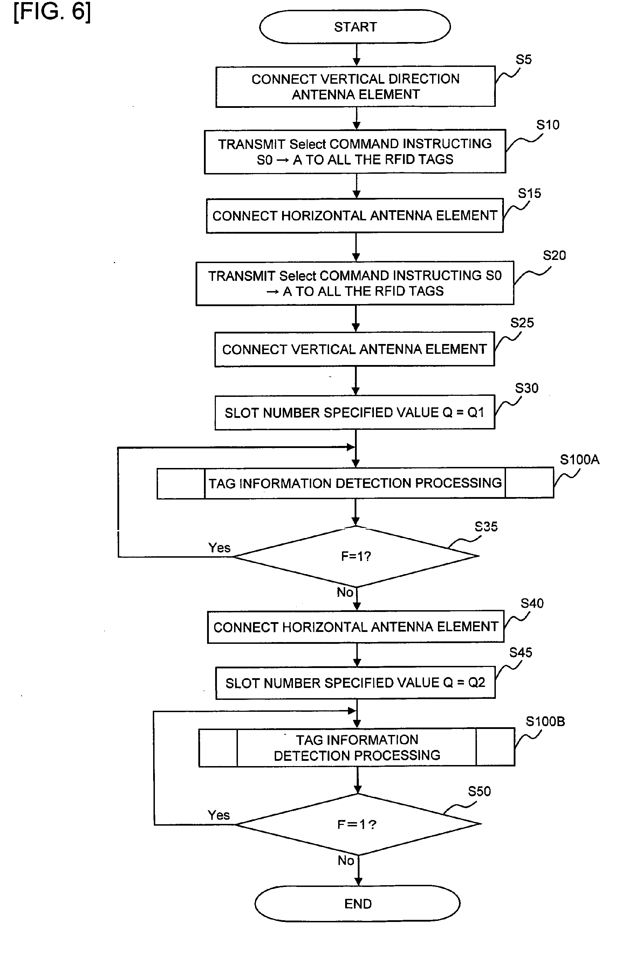

Fig. 6 is a flowchart illustrating a control procedure executed by the CPU 4 of the reader 1.

In Fig. 6, in this example, after the power is on (or after an operation to start reading processing of the RFID tag T is performed by the operation part 7, for example), this flow is started (START position).

Then, at Step S5, a control signal is outputted to the switch portion 341 so as to connect the transmit-receive splitter 214 to the vertical antenna element 3B and set the reader-side polarization direction to the vertical direction.

Subsequently, the routine goes to Step S10, and the "Select" command is transmitted without specifying any condition for radio communication, that is, instructing all the RFID tags T present in the communication area 20 of the reader 1 at that time to set the respective contents of the session flag S0 to "A". As a result, in the RFID tags T present in the communication area 20, the contents of the session flags S0 of the RFID tags T arranged with the tag-side polarization direction relatively close to (a direction with a relatively small angular deviation) the vertical direction (the reader-side polarization direction at that time) in the reader 1 are finalized at "A".

Subsequently, the routine goes to Step S 15, and by means of the control similar to Step S5, the transmit-receive splitter 214 is connected to the lateral antenna element 3A, and the reader-side polarization direction is set to the lateral direction. After that, at the subsequent Step S20, the "Select" command is transmitted to instruct all the RFID tags T to set the contents of the session flags S0 to the same "A" similarly in Step S10. As a result, in the RFID tags T present in the communication area 20, the contents of the session flags S0 of the RFID tags T arranged with the tag-side polarization direction relatively close to the lateral direction (the reader-side polarization direction at this time) in the reader 1 are finalized at "A". That is, the communication area 20 when transmission is made at Step S10 and the communication area 20 when transmission is made at Step S20 are overlapped at least partially (fully in this example).

And through the procedures at Step S5, Step S10, Step S15, and Step S20, the contents of the session flags S0 of all the RFID tags T present in the communication area 20 of the reader 1 are finalized at "A".

Subsequently, the routine goes to Step S25, and by the control similar to that at Step S5, again, the reader-side polarization direction is set to the vertical direction.

Then, at the subsequent Step S30, the value of the slot number specified value Q is set to Q1. This set value Q1 is a parameter for setting what identification slot number is to be used for detection of the tag information in tag information detection processing at Step S100A to be executed subsequently. Also, the set value Q1 is inputted and set by a user in advance according to the size of the communication area 20 of the reader 1 and the number of the RFID tags T expected to be able to conduct radio communication within that. The number of the RFID tags T expected to be able to conduct radio communication is the number of expected RFID tags T with the tag-side polarization direction arranged close to the vertical direction in detail, that is, the number of expected RFID tags T considered to be able to conduct radio communication with the reader 1 in a state in which the reader-side polarization direction is the vertical direction at that time. The set value Q1 is set such that sufficiently many but not more than necessary identification slot numbers are prepared so that a response signal transmitted from each of the expected number of the RFID tags T does not collide with each other.

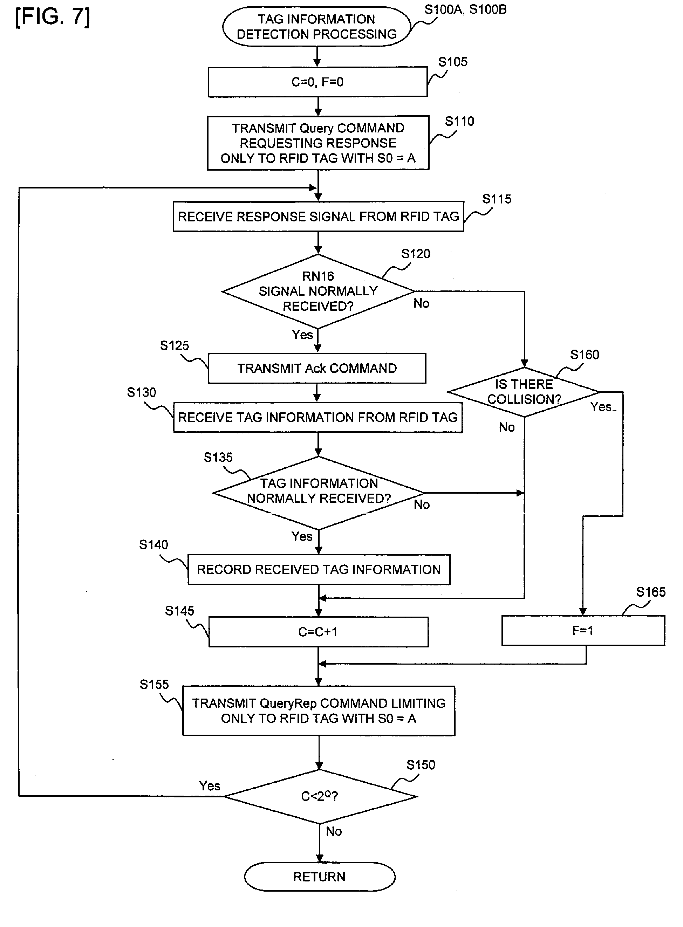

Subsequently, the routine goes to Step S100A, and the tag information detection processing is performed for detecting the respective tag information of the RFID tags T arranged with the tag-side polarization direction close to the vertical direction (the reader-side polarization direction at that time) in the communication area 20 of the reader 1 at that time (See Fig. 7, which will be described later). In this tag information detection processing, the tag information is detected with the identification slot number corresponding to the slot number specified value Q = Q1 set at Step S30 and if a collision between the response signals of the RFID tags T occurs in the middle of that, a value of a collision occurrence flag F is set to "1" and the processing is interrupted (See the flow of Step S160 -> Step S 165 in Fig. 7, which will be described later).

Subsequently, the routine goes to Step S35, and it is determined if the contents of the collision occurrence flag F are "1" or not, that is, if a collision between the response signals of the RFID tags T has occurred or not in the tag information detection processing at Step S 100A executed immediately before. If the contents of the collision occurrence flag F are "1", the determination is satisfied, that is, detection of the tag information failed and it is considered that the tag information detection processing needs to be performed again, and the routine returns to step S100A immediately before. On the other hand, if the contents of the collision occurrence flag are not "1", the determination is not satisfied, that is, it is considered that detection of the tag information was successful, and the routine goes to the subsequent Step S40.

At Step S40, by means of the control similar to Step S 15 again, the reader-side polarization direction is set to the lateral direction.

After that, at the subsequent Step S45, the value of the slot number specified value Q is set to Q2. This set value Q2 is a parameter similar to the set value Q1 and in this case, this is a value set corresponding to the number set slightly smaller than the expected number of the RFID tags T arranged with the tag-side polarization direction close to the lateral direction in the communication area 20 of the reader 1 (that is, the expected number of the RFID tags T considered to be able to conduct radio communication with the reader 1 with the reader-side polarization direction in the lateral direction at that time).

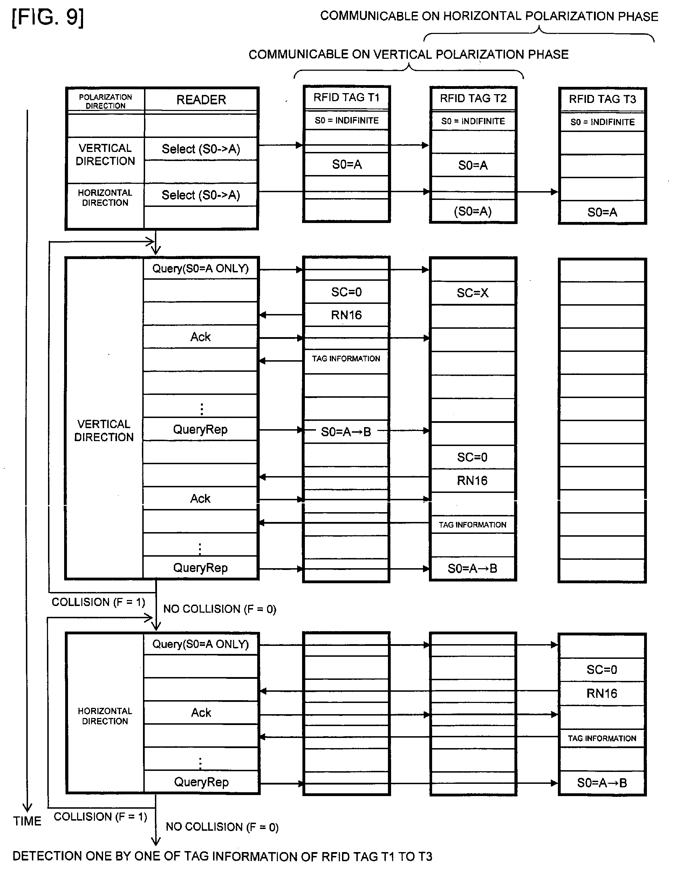

As a result, even if the expected number of the RFID tags T with the tag-side polarization direction corresponding to the lateral direction is substantially equal to the expected number of the RFID tags T corresponding to the vertical direction, the set value Q2 is set at a value smaller than the set value Q1. As a result, the identification slot number in the tag information detection processing executed immediately after that is set smaller than the identification slot number in the tag information detection processing executed previous time (See Fig. 9, which will be described later).

Subsequently, the routine goes to Step S100B, which is a procedure substantially similar to Step S100A, and the tag information detection processing is performed for detecting the respective tag information of the RFID tags T arranged with the tag-side polarization direction close to the vertical direction (reader-side polarization direction at that time) in the communication area 20 of the reader 1 at that time (See Fig. 7, which will be described later). In this tag information detection processing, the tag information is detected with the identification slot number corresponding to the slot number specified value Q = Q2 set at Step S45 and if a collision between the response signals of the RFID tags T occurs in the middle of that, similarly, the value of the collision occurrence flag F becomes "1", and the processing is interrupted (See the flow of Step S160 -> Step S 165 in Fig. 7, which will be described later).

Subsequently, the routine goes to Step S50, and it is determined if the contents of the collision occurrence flag F are "1" or not, that is, if a collision between the response signals of the RFID tags T has occurred or not in the tag information detection processing at Step S100B executed immediately before. If the contents of the collision occurrence flag are "1", the determination is satisfied, that is, it is considered that detection of the tag information failed and the routine returns to Step S100B immediately before. On the other hand, if the contents of the collision occurrence flag are not "1", the determination is not satisfied, that is, it is considered that detection of the tag information was successful, and this flow is finished.

Fig. 7 is a flowchart illustrating a detailed procedure of the tag information detection processing executed at Step S100A and Step S100B in Fig. 6. When the procedures in this flow are to be executed, as described above, the processing is executed in a state in which the value of the slot number specified value Q is set in advance (the procedures at Step S30 and Step S45 in the flow of Fig. 6).

First, at Step S105, contents of a counter variable C and the collision occurrence flag F are initialized to 0, respectively.

Subsequently, the routine goes to Step S 110, and the "Query" command is transmitted through the antenna element 3A or 3B and the RF communication control part 9. This "Query" command includes, as described above, the already set slot number specified value Q and the contents of the session flag S0 for limiting the RFID tag T from which a response is requested. In this example, the slot number specified value Q = Q1 is set in the first tag information detection processing executed if the reader-side polarization direction is the vertical direction, and the slot number specified value Q = Q2 is set in the second tag information detection processing executed if the reader-side polarization direction is the lateral direction. Also, the contents of the session flag S0 is limited by "A" in either case.

Subsequently, the routine goes to Step S 115, and a response signal is received from the RFID tag T only for a predetermined time through the antenna element 3A or 3B and the RF communication control part 9. After that, at Step S120, it is determined if the "RN16" response has been normally received (that is, only one "RN16" response has been normally received instead of no response or without no collision by a plurality of "RN16" responses) or not. In this determination, if the "RN16" response has been normally received, the determination is satisfied, that is, it is considered that there is the RFID tag T responding in the identification slot, and the routine goes to the subsequent Step S125.

At Step S125, the "Ack" command with the contents corresponding to the pseudo random number included in the "RN16" response received at Step S115 is transmitted through the RF communication control part 9 and the antenna element 3A or 3B. After that, at Step S130, the tag information including the tag ID from the RFID tag T, which is the identification information thereof, is received only for a predetermined time through the antenna element 3A or 3B and the RF communication control part 9, and then, the routine goes to the subsequent Step S135.

At Step S135, it is determined if the tag information has been normally received during the reception time (that is, if the single tag information has been normally received instead of no response) or not. In this determination, if the tag information has been normally received, the determination is satisfied, that is, it is considered that the tag information could be detected from the single RFID tag T in the identification slot, and the routine goes to the subsequent Step S140. At Step S140, the detected tag information is stored in a predetermined storage area in the memory 6 or the nonvolatile storage device 5, and the routine goes to the subsequent Step S 145. On the other hand, if the tag information has not been received normally due to radio interference, for example, at Step S135, the determination at Step S135 5 is not satisfied, that is, it is considered that the radio communication has failed, and the routine goes to Step S 145 as it is.

At Step S145, 1 is added to the value of the counter variable C, and the routine goes to Step S155. At Step S 155, after the "QueryRep" command is transmitted through the RF communication control part 9 and the antenna element 3A or 3B (in this "QueryRep" command, too, the contents of the session flag S0 ("A" in this example) for limiting the RFID tag T from which a response is requested is included), the routine goes to Step S150.

At Step S 150, it is determined if a value of the counter variable C is smaller than 2^{Q} or not. If the value of the counter variable C is smaller than 2^{Q}, the determination is satisfied, that is, it is considered that the current tag information detection processing has not been finished yet, and the routine returns to Step S 115 and repeats the similar procedure.

On the other hand, in the determination at Step S 150, if the value of the counter variable C is 2^{Q} or more, the determination is not satisfied, and this flow is finished.

Also, on the other hand, in the determination at Step S120, if the "RN16" response has not been normally received, the determination is not satisfied, that is, it is considered that the RFID tag T responding in the identification slot is not present and no response was made or a collision of the "RN16" responses from a plurality of the RFID tags T occurred, and the routine goes to the subsequent Step S160.

At Step S160, it is determined if a collision by a plurality of "RN16" responses has occurred or not during the reception time at Step S 115, that is if the reason why it is determined that the "RN16" response has not been received normally in the determination at Step S120 is a collision or not. In this determination, if a collision by the "RN16" responses has occurred, the determination is satisfied, that is, it is considered that detection in the current tag information detection processing has failed, and the routine goes to the subsequent Step S165. At Step S165, the value of the collision occurrence flag F is set to "1" (indicating occurrence of a collision; See Step S35 and Step S50 in Fig. 6), and the routine goes to Step S155.

Also, on the other hand, in the determination at Step S160, if a collision by the "RN16" responses has not occurred, the determination is not satisfied, that is, it is considered that the RFID tag T responding in the identification slot is not present and no response was made, and the routine goes to the above-described Step S 145.

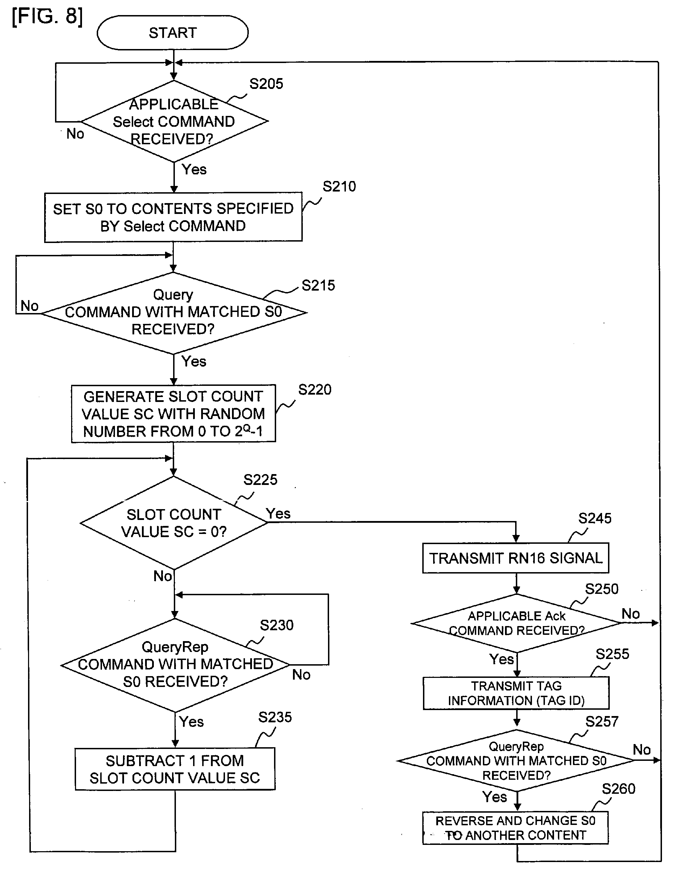

Fig. 8 is a flowchart illustrating a control procedure executed by the control part 157 disposed in the RFID tag circuit element To shown in Fig. 4. In Fig. 8, if the RFID tag circuit element To receives an initialization command (detailed description will be omitted), and radio power is given by its initial signal and the control part 157 is initialized, for example, the RFID tag circuit element To is started, and this flow is started.

First, at Step S205, command contents of the "Select" command from the reader antenna unit 3 of the reader 1 received by the tag antenna 151 immediately after the RFID tag circuit element To is started is interpreted. Then, it is determined if the RFID tag T is applicable to a specification condition (condition of the RFID tag T to be read by the reader 1) included in the command contents or not. If the RFID tag T is not applicable to the specification condition, the determination at Step S205 is not satisfied, and the same procedure is repeated till the "Select" command including the specification condition to which the RFID tag T is applicable is received and the routine stands by in a loop. On the other hand, if the "Select" command including the specification condition to which the RFID tag T is applicable is received, the determination at Step S205 is satisfied, and the routine goes to the subsequent Step S210.

At Step S210, the contents of the session flag S0 of itself are set to the contents specified by the "Select" command received at Step S205. In this example, since any "Select" command transmitted from the reader 1 at Step S10 and Step S20 in the flow of Fig. 6 instructs to set the contents of the session flag S0 to "A", each time the "Select" command is received, the contents of the session flag S0 is finalized to "A".

Subsequently, the routine goes to Step S215, and the command contents of the "Query" command from the reader antenna unit 3 of the reader 1 received by the tag antenna 151 subsequently to the "Select" command are interpreted. Then, it is determined if the contents of the session flag S0 stored in the RFID tag T match the contents of the specified session flag S0 (limiting condition of the RFID tag T from which the reader 1 requests a response) included in the command contents or not.

If the contents of the session flag S0 stored in the RFID tag T do not match the contents of the session flag S0 specified by the "Query" command, the determination at Step S215 is not satisfied, and the same procedure is repeated till the "Query" command including the session flag S0 matching the session flag S0 stored in the RFID tag T is received and the routine stands by in a loop. On the other hand, if the "Query" command including the specified session flag S0 matching the session flag S0 stored in the RFID tag T is received, the determination at Step S215 is satisfied, and the routine goes to the subsequent Step S220. Also, at this time, the slot number specified value Q included in the "Query" command is stored in the memory part 155.

At Step S220, on the basis of the slot number specified value Q stored in the memory part 155 at Step S215, the random numbers from 0 to 2^{Q}-1 are generated by the random number generator 158, and the value is set as the slot count value SC. By means of this slot count value SC, the identification slot in which the RFID tag T transmits the response signal ("RN16" response in this example) is determined.

Subsequently, the routine goes to Step S225, and it is determined if the slot count value SC is 0 or not. If the slot count value SC is not 0, the determination is not satisfied, that is, it is considered that the identification slot to transmit the response signal has not been reached, and the routine goes to the subsequent Step S230.

At Step S230, it is determined if the "QueryRep" command transmitted from the reader 1 at Step S155 in the flow of Fig. 7 has been received through the tag antenna 151 or not. As described above, the "QueryRep" command also includes the specified session flag S0, and it is also determined if the contents of the specified session flag S0 included therein match the contents of the session flag S0 stored in the RFID tag T (that is, if it is the "Query" command in the same communication session or not) if the "QueryRep" command is received.

If the "QueryRep" command has not been received or the contents of the specified session flag S0 included therein do not match the contents of the session flag S0 stored in the RFID tag T, the determination at Step S230 is not satisfied, and the routine stands by in a loop. If the "QueryRep" command has been received and the contents of the specified session flag S0 included therein match the contents of the session flag S0 stored in the RFID tag T, the determination at Step S230 is satisfied, the routine goes to Step S235, the slot count value SC is subtracted by 1, and the routine returns to Step S225 and repeats the similar procedure.

Also, on the other hand, if the slot count value SC is 0 in the determination at Step S225, the determination is satisfied, that is, it is considered that the RFID tag T has reached the identification slot to transmit the response signal, and the routine goes to the subsequent Step S245. At Step S245, the "RN16" response using a 16-bit pseudo random number, for example, is generated as the response signal at the modem part 156 and replied to the reader 1 through the tag antenna 151 at a predetermined timing.

After that, the routine goes to Step S250, and it is determined if the "Ack" command with the contents corresponding to the pseudo random number included in the "RN16" response transmitted at Step S245 has been received through the tag antenna 151 or not. If the "Ack" command has been received through the tag antenna 151, and the contents are those reflecting the pseudo random number included in the "RN16" response transmitted by the RFID tag T itself previously, the determination is satisfied, that is, it is considered that the individual RFID tag T is allowed to transmit the tag information from the reader 1, and the routine goes to the subsequent Step S255.

At Step S255, the tag information including the tag ID of the RFID tag T is transmitted to the reader 1 through the tag antenna 151, and the routine goes to Step S257.

At Step S257, it is determined if the "QueryRep" command transmitted from the reader 1 has been received through the tag antenna 151 or not. As described above, the specified session flag S0 is also included in the "QueryRep" command, and when the "QueryRep" command is received, it is also determined if the contents of the specified session flag S0 included therein match the contents of the session flag S0 stored in the RFID tag T or not (that is, if it is the "QueryRep" command in the same communication session or not).

If the "QueryRep" command has not been received or the contents of the specified session flag S0 included therein do not match the contents of the session flag S0 stored in the RFID tag T, the determination at Step S257 is not satisfied, the routine returns to Step S205, and the similar procedure is repeated. If the "QueryRep" command has been received and the contents of the specified session flag S0 included therein match the contents of the session flag S0 stored in the RFID tag T, the determination at Step S257 is satisfied, and the routine goes to the subsequent Step S260.

At Step S260, the contents of the session flag S0 are changed (reversed) to another contents different from those before. In this example, as described above, the contents of the session flag S0 are set only to two types, that is, "A" and "B", and whichever "Select" command is received at Step S205, the contents of the session flag S0 is set to "A" at Step S210, and also the contents are maintained till the tag information is transmitted at Step S255. Therefore, at Step S260, an operation to reverse the contents of the session flag S0 from "A" to "B" in a lump sum is performed. Then, the routine returns to Step S205, and the similar procedure is repeated.

Also, on the other hand, in the determination at Step S250, if the "Ack" command has not been received through the tag antenna 151 (or even if it is received, if the contents do not reflect the pseudo random number included in the "RN16" response transmitted before), the determination is not satisfied, and it is considered that the radio communication has failed for some external factor (or the reader 1 allows another RFID tag circuit element To to transmit the tag information in the same identification slot), no signal is transmitted and the routine returns to Step S205.

Fig. 9 is a sequence diagram illustrating an example of transmission and reception and a control operation of various signals transmitted and received between the reader 1 executing the control procedures in Figs. 6 and 7 and a plurality of the RFID tags T executing the control procedures in Fig. 8. In the figure, changes are made from the upper side to the lower side in a time series, and only the procedures of the reader 1 and the RFID tag T relating to this time series are illustrated.

In Fig. 9, in this example, a case in which the reader 1 detects the tag information for each of the three RFID tags T1 to T3 present in the communication area 20. Also, as for the polarization direction, based on a direction of the attitude of the housing 1A in the reader 1, which is a rectangular solid shape, a direction parallel with the thickness direction of the housing (that is, the longitudinal direction of the vertical antenna element 3B) is expressed as the "vertical direction", while a direction parallel with the width direction of the housing (that is, the longitudinal direction of the lateral antenna element 3A) as the "lateral direction".

Also, at this time, with regard to the RFID tag T1, it is arranged with the tag-side polarization direction substantially matching the vertical direction, and only when the reader-side polarization direction is the vertical direction, the radio communication can be conducted with the reader 1. Also, with regard to the RFID tag T3, it is arranged with the tag-side polarization direction substantially matching the lateral direction, and only when the reader-side polarization direction is the lateral direction, the radio communication can be conducted with the reader 1. With regard to the RFID tag T2, it is arranged with the tag-side polarization direction being an angular direction substantially in the middle of the vertical direction and the lateral direction (diagonal direction), and the radio communication can be conducted with the reader 1 with the reader-side polarization direction in either of the vertical direction or the lateral direction.

On the basis of the above assumption, in Fig. 9, first, in a state before the reader 1 transmits the first "Select" command, the contents of the session flag S0 in any of the three RFID tags T1 to T3 are indefinite and can take either of the "A" or "B" in this example. Then, after connecting the vertical antenna element 3B, the reader 1 transmits the "Select" command without specifying any condition for the radio communication, that is, instructing all the RFID tags T present in the communication area 20 to set the contents of the session flag S0 to "A" (See Step S10 in Fig. 6). This "Select" command is received by both the RFID tags T1 and T2 capable of radio communication in the vertical polarization phase, and their session flags S0 are definite with the contents of "A".

Subsequently, after connecting the lateral antenna element 3A, the reader 1 transmits the "Select" command to have the contents of the session flag S0 also set to "A" to all the RFID tags T present in the communication area 20 again (See Step S20 in Fig. 6). As a result, the contents of the session flags S0 in both of the RFID tags T2 and T3 capable of radio communication in the lateral polarization phase are finalized as the contents of "A" (at this time, too, the RFID tag T2 has the contents of the session flag S0 finalized as "A" again.)

Then, the reader 1 connects the vertical antenna element 3B again and executes the tag information detection processing for detecting the tag information of the RFID tags T1 and T2 corresponding to the vertical polarization phase. In this tag information detection processing, first, the reader 1 transmits the "Query" command (including the slot number specified value Q = Q1 corresponding to the vertical polarization phase) requesting a response only from the RFID tag T with the contents of the session flag S0 as "A" to all the RFID tags T present in the communication area 20 (See Step S110 in Fig. 7). As a result, in any of the identification slot which will be repeated after that, the respective tag information of the RFID tags T1 and T2 capable of radio communication in the vertical polarization phase is detected. In the illustrated example, the RFID tag T1 generated with the slot count value SC at 0 by the random number (0 to 2^{Q1}-1) immediately after reception of the "Query" command responds to the reader 1 in the first identification slot immediately after the "Query" command.

In this first identification slot, first, the RFID tag T1 transmits the "RN16" response as a response signal to the reader 1 (See Step S245 in Fig. 8), and the reader 1 having received that replies the "Ack" command responding to the "RN16" response (See Step S125 in Fig. 7). Then, the RFID tag T1 receives the "Ack" command and checks that the contents correspond to the "RN16" response transmitted by itself and then, transmits the tag information including the tag ID to the reader 1 (See Step S255 in Fig. 8). After that, the "QueryRep" command (specifying S0 = A) is received in the subsequent identification slot, the contents of the session flag S0 are reversed from "A" to "B" (Step S260 in Fig. 8). As a result, no response will be made to the "Query" command and the "QueryRep" command (only S0 = A is specified in either case) received after that but the standby state will be maintained.

On the other hand, in the illustrated example, the RFID tag T2 has generated the slot count value SC as a value of X by the random number (0 to 2^{Q1}-1, too) immediately after the reception of the "Query" command and thus, it responds to the reader 1 in the X + 1 st identification slot counting from immediately after the "Query" command. This (X + 1) th identification slot is started by transmission and reception of the X-th "QueryRep" command (because the "QueryRep" command is transmitted from the second identification slot). The RFID tag T2 has the slot count value SC at 0 when the X-th "QueryRep" command is received (See Step S225 in Fig. 8), and a series of transmission and reception of the tag information starting from the "RN16" response is performed with the reader 1. Then, after the RFID tag T2 transmits the tag information to the reader 1, the tag receives the "QueryRep" command (specifying S0 = A) in the subsequent identification slot and then, has the contents of the session flag S0 reversed from "A" to "B" similarly to the RFID tag T1 and goes into the standby state (Step S260 in Fig. 8).

Then, the identification slot is repeated after that, too, and when the 2^{Q1}-th identification slot is finished, the tag information detection processing corresponding to the current vertical polarization phase is finished. However, if a collision of the response signals from the plurality of RFID tags T occurs in any of the identification slots performed in the middle of this tag information detection processing, it is considered at that time that the detection processing failed, the processing is interrupted (the value of the collision occurrence flag F is set to "1". See Step S 165 in Fig. 7), and the tag information detection processing corresponding to the same vertical polarization phase is performed again. On the other hand, if the 2^{Q1}-th identification slots are all finished without a collision of the response signals, it is considered that the tag information detection processing corresponding to the current vertical polarization phase has normally accomplished (with the value of the collision occurrence flag F still at "0"), and the routine goes to the tag information detection processing corresponding to the subsequent lateral polarization phase.

In the tag information detection processing corresponding to the lateral polarization phase, the reader 1 detects only the tag information of the RFID tag T3 which has not been detected yet in the RFID tags T2 and T3 corresponding to the lateral polarization phase while the lateral antenna element 3A is connected. First, the reader 1 transmits the "Query" command (including the slot number specified value Q = Q2 corresponding to the lateral polarization phase) requesting a response only from the RFID tag T with the contents of the session flag S0 at "A" to all the RFID tags T present in the communication area 20 (See Step S 110 in Fig. 7). Then, from immediately after the transmission of the "Query" command, the identification slot is usually repeated 2^{Q2} times similarly to the above, and the tag information of the RFID tag T is detected from any of the identification slots.

Here, the RFID tag T2 has already reversed and changed the contents of the session flag S0 to "B" in the tag information detection processing corresponding to the vertical polarization phase and gone to the standby state even if the radio communication is possible with the reader 1 in the radio wave of the lateral polarization phase. Therefore, even if the "Query" command including the specified session flag S0 = A is received, a response signal is not transmitted in the identification slot repeated after that. That is, the RFID tag T2 having transmitted the tag information once will not transmit the tag information in duplicate again.

Also, as a result, in the second tag information detection processing corresponding to the lateral polarization phase, the number of RFID tags T whose tag information is detected is smaller than that in the tag information detection processing corresponding to the vertical polarization phase performed for the first time. Therefore, a possibility of collision of the response signal can be sufficiently suppressed even if the detection processing is performed with smaller identification slot number, that is, in the set values Q1 and Q2 at which the slot number specified value Q included in the "Query" command in the respective tag information detection processing, the set value Q2 can be set at a value smaller than the set value Q1.

In the illustrated example, in the tag information detection processing corresponding to the lateral polarization direction, only the RFID tag T3 generates the slot count value SC at 0 by the random number (0 to 2^{Q2}-1) immediately after reception of the "Query" command and transmits the tag information responding to the reader 1 in the first identification slot immediately after the "Query" command (See Step S255 in Fig. 8). The RFID tag T3 also transmits the tag information and receives the "QueryRep" command in the subsequent identification slot (only S0 = A is specified in either case) and then, reverses the contents of the session flag S0 from "A" to "B" similarly to the RFID tags T1 and T2 and goes into the standby state (See Step S260 in Fig. 8).

In the tag information detection processing corresponding to the lateral polarization phase, too, if a collision of the response signals in any of the identification slots in the middle of the processing, the processing is interrupted at that time (the value of the collision occurrence flag F becomes "1"), and the tag information detection processing corresponding to the same lateral polarization phase is performed again. On the other hand, if all the 2^{Q2}-th identification slots are finished without any collision of the response signal (the value of the collision occurrence flag F remains at "0"), the entire detection processing is finished.

As described above, the three RFID tags T1 to T3 with largely different tag-side polarization directions can be detected only once each without duplication of the respective tag information.

In the above, the communication area 20 generated in the vertical polarization phase and the communication area 20 generated in the lateral polarization phase correspond to the plural modes of communication area described in each claim.

Also, the procedures at Step S10 and Step S20 in the flow of Fig. 6 executed by the CPU 4 of the reader 1 function as identifier unification command transmitting means, and the procedure at Step S 110 in the flow of Fig. 7 functions as reading command transmitting means. Also, the procedures at Step S 115 and Step S130 function as slot receiving means, and the procedure at Step S45 in the flow of Fig. 6 function as slot control means.

Also, the switch portion 341 functions as antenna switching means. Also, the procedures at Step S5, Step S15, Step S25, and Step S40 in the flow of Fig. 6 executed by the CPU 4 of the reader 1 function as polarization phase control means. They also function as communication area switching means.

As described above, in this embodiment, the RFID tag T is provided with the session flag S0 as a reversible identifier capable of reversing the contents at response. Also, the direction of polarization phase formed from the reader antenna unit 3 can be sequentially switched to a plurality of polarization directions (vertical direction and lateral direction in the above-described example) through the switch portion 341. Then, to the RFID tags T, the "Select" command is transmitted by the procedures at Step S10 and Step S20 in Fig. 6, and the session flags S0 of all the RFID tags T are unified to the contents of "A" before reverse. After that, first, the polarization direction is switched to the vertical direction at Step S25 in the flow of Fig. 6, the "Query" command is transmitted at Step S 110 in the flow of Fig. 7 and the tag information stored in the RFID tag T is obtained.

At this time, the RFID tag T having responded to the "Query" command has the contents of the session flag S0 changed from "A" state before the reverse to "B" state after the reverse. Therefore, the RFID tag T having responded once in the vertical polarization phase does not respond to a radio wave in the lateral polarization phase switched after that (even if the wave reaches). That is, the RFID tag T can be distinguished from an RFID tag T not having responded but remaining with the contents of the session flag S0 in "A" state before the reverse. As a result, in the tag information detection processing in the lateral polarization phase (Step S100B in Fig. 6), only by transmitting the "Query" command by specifying only the RFID tag T with the contents of the session flag S0 in the "A" state before reverse, the RFID tag T capable of duplicated radio communication can be prevented from responding again.

As described above, in communication while the polarization direction is switched, even if there is an RFID tag T capable of radio communication in a plurality of polarization directions in duplication, after a response to the reader 1 side is made once, a subsequent response can be prevented reliably. As a result, as compared with the case in which the deletion processing of the detection result should be performed after the RFID tags T are detected from the reader 1 side in duplication several times, the detection time of the RFID tag T can be reduced, and the search efficiency can be improved.

Also, particularly in this embodiment, the set values Q1 and Q2 (Q1 > Q2) are set by the procedures at Step S30 and Step S45 in the flow of Fig. 6. That is, in response to the fact that the RFID tag T having responded once in the vertical polarization phase does not respond again in the lateral polarization phase, the procedure at Step S45 decreases the identification slot number from that at Step S30. As a result, unnecessary increase of the identification slot number is prevented, the identification slot number is minimized, and the communication time can be reduced.

In this embodiment, the example in which a plurality of communication areas 20 with the polarization directions different from each other (the position and size of the areas are substantially the same, for example) are generated as plural modes of communication area which can be switched by the reader 1 has been described, but the present invention is not limited to that. Such variations will be sequentially described below.

(1) When a plurality of communication areas with different frequencies are generated: This is a case in which a plurality of communication areas 20 with different communication frequencies (the position and size of the areas are substantially the same, for example) are generated are generated while being switched by the reader 1, for example. That is, the reader 1 can switch among the plurality of communication frequencies (frequency channels) and conduct communication, and a relatively wide allowable range of the frequency at which the RFID tag T can conduct communication can be considered. In this case, there can be a case in which the RFID tag T capable of radio communication only at a relatively low communication frequency in the frequency band (or its neighboring communication frequency), the RFID tag T capable of radio communication only at a relatively high communication frequency to the contrary and the RFID tag T capable of radio communication capable of radio communication at the both communication frequencies are mixed.

In this case, in this embodiment, for example, it is only necessary that the communication frequency is switched in a desired width by a control method such as switching a frequency from the PLL 215B of the RF communication control part 9 by a control signal outputted from the CPU 4 instead of switching of the polarization direction (See Fig. 3), and unification of the session flags S0 of all the RFID tags T by transmission of the "Select" command at each of the communication frequencies and the tag information detection processing according to sequential switching of the communication frequency after that are performed.

In this case, the PLL 215B and the control procedure outputting a control signal thereto function as frequency control means together and also function as communication area switching means.

In this variation, by switching the communication frequency, while the plurality of communication areas with different frequencies are sequentially generated, the same effect as the embodiment can be obtained.

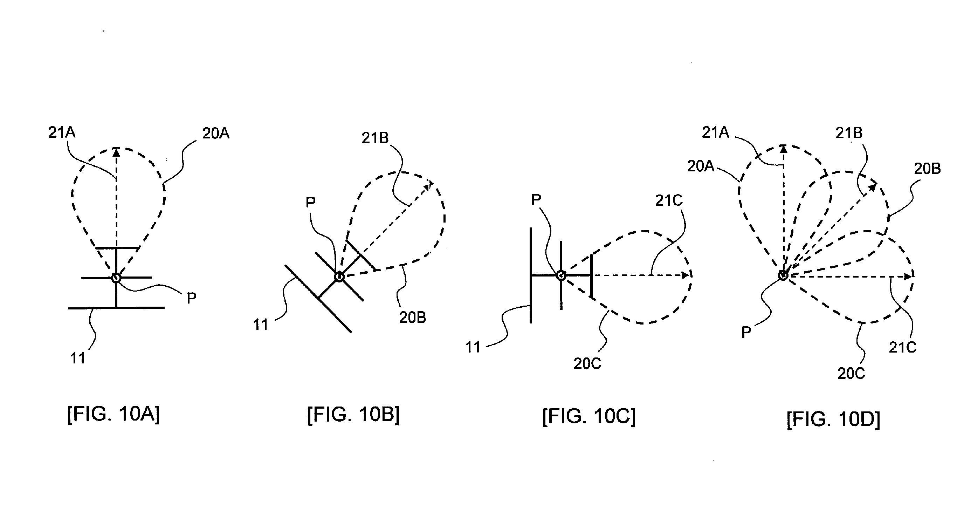

(2) When a plurality of different communication areas are sequentially generated by changing directivity:
This is a case in which a directivity of the antenna (direction of main lobe) is changed and the plurality of communication areas 20 are sequentially formed in different directions according to that, for example. Specifically, as shown in Figs. 10A to 10C, for example, main lobe directions 21 a, 2 1 b, and 2 1 c are changed by rotating and driving a center shaft P of a Yagi antenna (antenna means) 11 by a driving device such as a motor (not particularly shown), communication areas 20a, 20b, and 20c are formed sequentially, and a plurality of RFID tags T are present in these communication areas 20a to 20c. Fig. 10D shows an arrangement relationship of the communication areas 20a, 20b, and 20c (areas when each of them performs the tag information detection processing) in each of Figs. 10A to 10C, and the RFID tag T arranged in a range in which the communication areas 20a, 20b, and 20c are overlapped with each other is subjected to the tag information detection processing in duplication several times.

In this case, the session flags S0 of all the RFID tags T are unified by transmission of the "Select" command in advance in each of the communication areas 20a, 20b, and 20c and then, it is only necessary that the communication areas 20a, 20b, and 20c are sequentially switched and the tag information detection processing is performed.

In this case, the driving device of the Yagi antenna 11 and the control procedure for outputting a driving signal thereto function as directivity control means and also function as communication area switching means.

In this variation, by switching and controlling the main lobe directions 2 1 a, 2 1 b, and 21c, the plurality of communication areas 20a, 20b, and 20c with different directivities can be sequentially generated and the same effect as the embodiment can be obtained. In the example shown in Figs. 10A to 10D, the main lobe directions 21a, 21b, and 21c of the Yagi antenna 11 are changed only in a range of the first quadrant seen in the so-called two-dimensional coordinate but can be changed to the range of the other quadrants. Also, instead of control of the directivity by changing the attitude of the antenna itself, the directivity may be controlled by controlling at least one of transmission and reception gain in each antenna element using an array antenna provided with a plurality of antenna elements, for example. Moreover, the sizes of the communication areas 20a, 20b, and 20c may be changed by changing a power together with the directivity control (or instead of the directivity control).

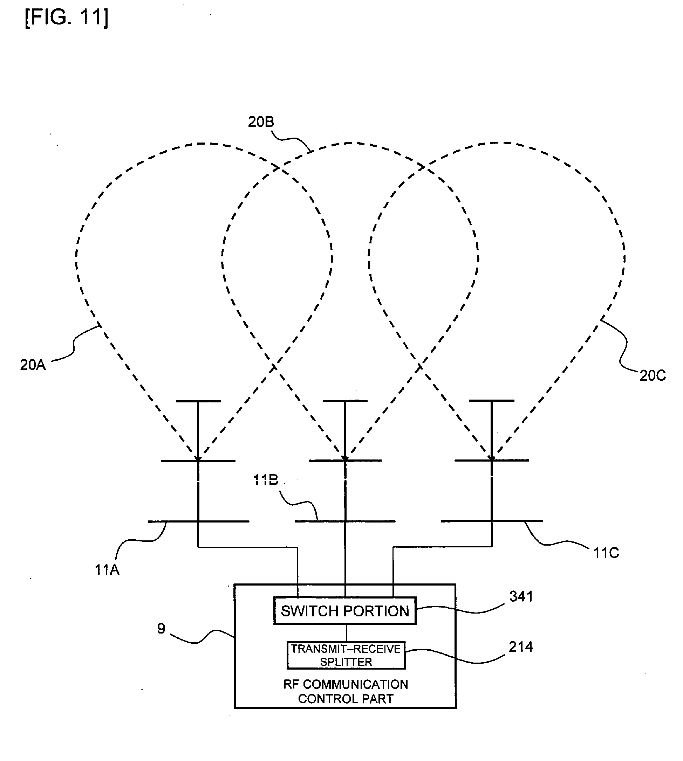

(3) When the respective communication areas are generated by a plurality of antennas:
This is a case in which a plurality of antennas generating the communication areas 20 different from each other are used, for example. Specifically, as in an example shown in Fig. 11, three antennas (antenna means, antennas; Yagi antennas similar to the above in this example) 11a, 11b, and 11c are fixed in arrangement relatively close to each other and the communication areas 20a, 20b, and 20c are in an arrangement relationship partially overlapped with each other. In this case, when the reader 1 controls the switch portion 341, any one of the three antennas 11a, 11b, and 11c is connected to the transmit-receive splitter 214, by which the different communication areas 20a, 20b, and 20c are sequentially switched and generated. The tag information detection processing is performed in duplication several times for the RFID tags T arranged in a range where the communication areas 20a, 20b, and 20c are overlapped.

In this case, too, it is only necessary that the session flags S0 of all the RFID tags T are unified in advance by transmission of the "Select" command in each of the communication areas 20a, 20b, and 20c and then, the tag information detection processing is performed by sequentially switching the communication areas 20a, 20b, and 20c.

In this case, the switch portion 341 switching the connection with the antennas 11a, 11b, and 11c functions as antenna switching means and also functions as communication area switching means.

In this variation, by switching and controlling connection of the antenna to be used in the communication, while the plurality of communication areas 20a, 20b, and 20c with different positions are sequentially generated, the same effect as the embodiment can be obtained. The sizes of the communication areas 20a, 20b, and 20c may be changed by changing the power together with the antenna switching (or instead of the antenna switching).

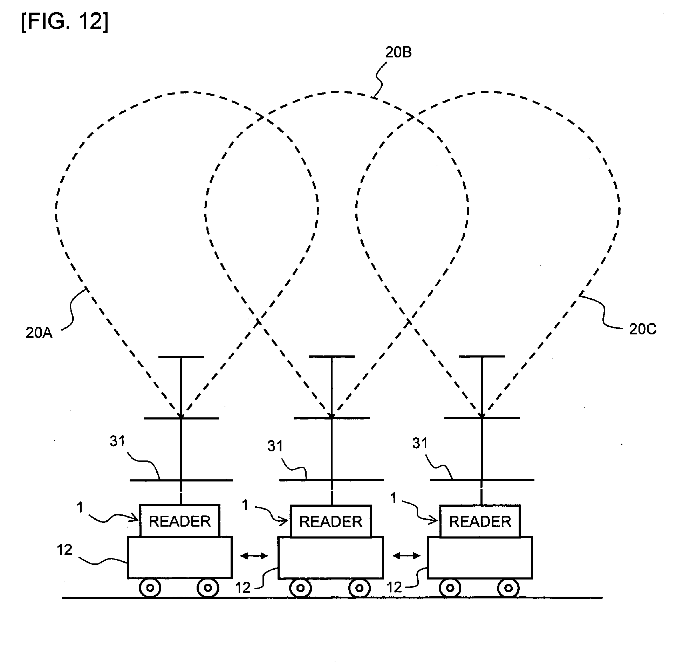

(4) When communication areas are generated sequentially at different positions by moving the antenna:
This is a case in which a single antenna is moved by the reader 1, and the communication areas 20 are sequentially generated at different positions (formed at a plurality of locations) according to that, for example. Specifically, as shown in Fig. 12, for example, an antenna 31 (antenna means, a single antenna configured movably; a Yagi antenna similar to the above, in this example) is fixed to a bogie 12, and by moving the bogie 12, the communication areas 20a, 20b, and 20c are sequentially formed, and the RFID tags T are present in the communication areas 20a to 20c. In this case, the three communication areas 20a, 20b, and 20c (area when the tag information detection processing is performed, respectively) are partially overlapped, and the tag information detection processing is performed in duplication several times for the RFID tags T arranged in the overlapped ranges.

In this case, too, it is only necessary that the unification of the session flags S0 of all the RFID tags T by transmission of the "Select" command in each of the communication areas 20a, 20b, and 20c and the tag information detection processing according to the sequential switching of the communication areas 20a, 20b, and 20c after that.

In this case, the bogie 12 for moving the antenna 31 to plural locations and means for moving and controlling the same (driving means, for example) function as antenna driving means and also function as communication area switching means.

In this variation, by moving the position of the antenna 31, while the plurality of communication areas 20a, 20b, and 20c with different positions are sequentially generated, the same effect as the embodiment can be obtained. It may also be configured that the power is changed together with the antenna movement (or instead of the antenna movement) so as to change the sizes of the communication areas 20a, 20b, and 20c.

### (5) Others

In the above, the cases in which the plurality of RFID tags T are present in the communicable range from the antenna have been described, but not limited to them. That is, if a single RFID tag T is arranged within a range where the plurality of communication areas are overlapped, the RFID tag T would be subjected to the tag information detection processing in duplication several times, and the present invention can be applied in order to avoid such plural responses (a response shall be made only once). In this case, too, the same effect as above can be obtained.

Also, the "Select" command, the "Query" command, the "RN16" response, the "Ack" command, the "QueryRep" command, for example, used in the above shall comply with the specification formulated by EPC global. The EPC global is a non-profit corporation jointly established by International EAN Association, which is an international organization of distribution codes, and Uniformed Code Council (UCC), which is a U.S. distribution code organization. Signals complying with other standards will do as long as they serve the same functions.

Other than those described above, methods of the embodiments and each variation may be combined as appropriate for use.

Though not specifically exemplified, the present invention should be put into practice with various changes made in a range not departing from its gist.

### EXPLANATION OF REFERENCE NUMERALS

- 1: reader (apparatus for communicating with an RFID tag)
- 2: main body control part
- 3: reader antenna unit (antenna means)
- 3A: lateral antenna element (antenna)
- 3B: vertical antenna element (antenna)
- 4: CPU
- 5: nonvolatile storage device
- 6: memory
- 7: operation part
- 8: display part
- 9: RF communication control part
- 11: Yagi antenna (antenna means)
- 11a to c: Yagi antenna (antenna means)
- 12: bogie (communication area switching means)
- 20: communication area
- 20a to c: communication area
- 21a to c: main lobe direction
- 31: Yagi antenna (antenna means, antenna)
- 150: IC circuit part
- 151: tag antenna
- 215B: PLL (communication area switching means, frequency control means)
- 341: switch portion (communication area switching means, antenna switching means)
- B: article
- S0: session flag (reversible identifier)
- T: RFID tag
- To: RFID tag circuit element

## Claims

1. An apparatus for communicating with an RFID tag (1) comprising:
antenna means (3; 11; 11a, 11b, 11c; 31) configured to conduct radio communication with at least one RFID tag (T) having a reversible identifier (S0) capable of being reversed at response;
communication area switching means (341, S5, S15, S25, S40; 215B; 12) capable of sequentially switching and generating a plurality of modes of communication areas (20; 20a, 20b, 20c) from said antenna means (3; 11; 11a, 11b, 11c; 31);
identifier unification command transmitting means (S10, S20) configured to transmit an identifier unification command for unifying said reversible identifier (S0) of said RFID tag (T) present within said communication area (20; 20a, 20b, 20c) to a state before reverse to said RFID tag (T) present in each mode of the communication area (20; 20a, 20b, 20c) sequentially generated by said communication area switching means (341, S5, S15, S25, S40; 215B; 12) through said antenna means (3; 11; 11a, 11b, 11c; 31); and
reading command transmitting means (S 110) configured to transmit a reading command for obtaining information stored in said RFID tag (T) to said RFID tag (T) through said antenna means (3; 11; 11a, 11b, 11c; 31) after said identifier unification command is transmitted to said RFID tag (T) in said plurality of modes of communication area (20; 20a, 20b, 20c) generated by said communication area switching means (341, S5, S15, S25, S40; 215B; 12).

2. The apparatus (1) according to claim 1, **characterized in that**:
said reading command transmitting means (S 110) transmits said reading command to said RFID tag (T) present in each mode of the communication area (20; 20a, 20b, 20c) according to sequential switching of the mode of said communication area (20; 20a, 20b, 20c) by said communication area switching means (341, S5, S15, S25, S40; 215B; 12) after said identifier unification command is transmitted to said RFID tag (T) of said plurality of modes of communication area (20; 20a, 20b, 20c).

3. The apparatus (1) according to claim 2, **characterized in that**:
said reading command transmitting means (S 110) generates said reading command for obtaining said information with specifying said RFID tag (T) whose said reversible identifier (S0) is in said state before reverse and transmits the command to said RFID tag (T) through said antenna means (3; 11; 11a, 11b, 11c; 31), and
the apparatus (1) further comprises:
slot receiving means (S 115, S130) capable of receiving response signals transmitted from the RFID tags (T) according to said reading command by dividing the receiving response signals into a plurality of identification slots; and
slot control means (S45) that decreases the number of said identification slot of said slot receiving means (S 115, S 130) according to sequential switching of the mode of said communication area (20; 20a, 20b, 20c) by said communication area switching means (341, S5, S15, S25, S40; 215B; 12) after said identifier unification command is transmitted to said RFID tag (T) present in said plurality of modes of communication area (20; 20a, 20b, 20c).

4. The apparatus (1) according to claim 3, **characterized in that**:
said antenna means (3; 11; 11 a, 11b, 11c; 31) includes a plurality of antennas (3A, 3B; 11a, 11b, 11c) with modes of communication area (20; 20a, 20b, 20c) different from each other; and
said communication area switching means (341, S5, S15, S25, S40) includes antenna switching means (341) that switches said antennas (3A, 3B; 11a, 11b, 11c) that conduct information transmission and reception with said RFID tag (T).

5. The apparatus (1) according to claim 3, **characterized in that**:
said communication area switching means includes directivity control means that controls a directivity by said antenna means (11) and generates a plurality of said communication areas (20a, 20b, 20c) with main lobe direction (21 a, 21 b, 21 c) different from each other.

6. The apparatus (1) according to claim 3, **characterized in that**:
said communication area switching means (341, S5, S15, S25, S40; 215B; 12) includes polarization phase control means (S5, S15, S25, S40) that controls a polarization phase of a communication wave from said antenna means (3) and generates a plurality of said communication areas (20) with polarization directions different from each other.

7. The apparatus (1) according to claim 3, **characterized in that**:
said communication area switching means (341, S5, S15, S25, S40; 215B; 12) includes frequency control means (215B) that controls a communication frequency from said antenna means (3) and generates a plurality of said communication areas (20) with communication frequency different from each other.

8. The apparatus (1) according to claim 3, **characterized in that**:
said antenna means (31) includes a single antenna (31) constituted movably; and
said communication area switching means (341, S5, S15, S25, S40; 215B; 12) includes antenna moving means (12) that moves said antenna (31) to a plurality of locations and has the antenna conduct communication at each location.
